# EUROPEAN PATENT SPECIFICATION

(11) **EP 2 248 556 B1**
(45) Date of publication and mention of the grant of the patent: **27.07.2016**
(21) Application number: 10160179.7
(22) Date of filing: 16.04.2010
(51) Int. Cl.: A62B 9/04, A62B 25/00, F16L 3/13, A45F 3/00, A45F 5/02, A45F 3/14

(54) **Clip for use with breathing apparatus**
Clip zur Verwendung mit einem Atemgerät
Pince à utiliser avec un appareil respiratoire

(30) Priority: 06.05.2009 GB 0907753
(43) Date of publication of application: 10.11.2010
(73) Proprietor: Draeger Safety UK Ltd., Blyth, Northumberland NE24 4RG (GB)
(72) Inventor: Wrigley, Gordon, Newcastle-Upon-Tyne Tyne and Wear NE3 5SZ (GB); Townsend, Paul, Cramlington, Northumberland NE23 3QZ (GB)
(74) Representative: McCartney, Jonathan William

(56) References cited:
- EP-A1- 1 927 379
- EP-A1- 1 952 719
- US-A- 1 464 659
- US-A- 4 550 829
- US-A- 4 621 753
- US-A- 6 065 563

## Description

The present invention relates to a clip for attaching to a strap so that a flexible conduit can be held on the strap. Such a clip can be used with an adjustable harness for use with self-contained breathing apparatus (SCBA) in order to reduce the risk of snagging, because the flexible conduit is held tightly against the strap.

SCBA harnesses generally comprise structural support member in the form of a back plate, a pair of shoulder straps and a belt. The back plate is provided with a valve towards the lower end and a retaining strap. In use, the cylinder of breathable gas is attached to the valve and is secured to the back plate by means of the retaining strap. One or more flexible conduits in the form of hoses extend from the valve along the back plate to the shoulder straps so that breathing apparatus and other equipment worn by the user may be conveniently connected thereto. Some SCBA harnesses are adjustable in length, so as to allow them to be comfortably worn by users of different heights.

US 6158670 shows a clip for attaching water hose nozzle assembly to a chest plate. In contrast, breathing hoses are usually attached by a small clip to a strap used for holding the harness. Such a clip is usually fitted to or around the strap, when worn, and has an open recess for retaining the hose, which clips into it. The hose can become detached, and also it is difficult to fit more than one hose because they would tend to interfere.

EP 1 952 719 A1 discloses a clip according to the preamble of claim 1.

According to one aspect of the invention there is provided a clip for attaching to a strap in order to hold a flexible conduit, the clip having a retaining part, for retaining the flexible conduit, which is open such that a flexible conduit can be passed into it, and side parts, disposed either side of the retaining part, for engaging the strap, in which when the clip is fitted to the strap the retaining part is open towards the strap and is arranged to hold the flexible conduit against the strap such that the flexible conduit is completely enclosed.

This arrangement holds the flexible conduit more securely, because the flexible conduit cannot be detached unless the clip itself is detached from the strap. Of course, the design means that the flexible conduit has to be placed in the clip before the clip is attached to the strap, which is less convenient but is entirely manageable.

In another aspect the invention concerns a clip for attaching to a strap in order to hold a flexible conduit, the clip having a retaining part, for retaining or engaging the flexible conduit, and side parts, one each side of the retaining part, for engaging the strap, in which the retaining part is offset, with respect to the width of the strap, so as to provide more space over the side part of the clip on one side than on the other.

This layout makes it easier to fit two flexible conduits to the strap, because one can be fixed with a clip having the retaining part offset to one side, and the other with a clip with the offset to the other side. The flexible conduits then do not interfere with each other, or at any rate less than with the conventional centrally located retaining part.

The two ideas can be, and preferably are, combined. In all cases the side parts preferably engage with the strap by way of flanges engaging underneath the strap around the edges of the strap, on the face opposite the hose-engaging portion. These flanges can be of the same length (i.e. in the side direction of the strap), or can be of different lengths, e.g. corresponding to the lateral extent of the side parts; in the latter case the gap between them corresponds to the opening in the hose-engaging portion.

The clips are preferably generally symmetrical about a plane perpendicular to the length of the strap. A pair of the clips can be applied to the strap opposite ways round (but on the same face of the strap) so that one of them can enclose a hose running along one side of the strap and the other a hose on the other side; thus the two hoses do not interfere with each other. Of course, the clips can be provided in distinct left- and right-handed versions, but this is usually less convenient. Typically hoses in breathing equipment have a diameter, say 12 mm, less than half the width of the straps, typically 50 mm, so even accounting for the thickness of the clip, perhaps 3 mm, there is room for two hoses.

Finally, the invention is concerned with harnesses, in the first place with a harness for breathing equipment, having a strap, in particular a shoulder strap, on which is located a clip, such as a clip as defined above, the clip engaging round the rear side of the strap and completely enclosing, or being capable of enclosing, a hose so as to retain the hose against the strap. In the second harness aspect there is provided a harness for breathing equipment, having a strap, in particular a shoulder strap, on which is located a clip, preferably a clip as defined above, the clip being adapted to retain the hose on the strap in a manner offset from the centre line of the strap. Preferably the assembly has two such clips, with offsets to different sides so that the retained hoses do not interfere with each other.

The invention may comprise any combination of the features and/or limitations referred to herein, except combinations of such features as are mutually exclusive.

Embodiments of the present invention will now be described, by way of example only, with reference to the accompanying drawings, in which:
Figure 1 shows a view of part of the rear of a harness for a breathing apparatus using the clips of the invention;
Figure 2 shows a clip in accordance with the invention;
Figure 3 shows the clip applied to a strap and retaining a hose;
Figure 4 shows two clips applied to a strap, with hoses side by side;
Figure 5 shows a section through a clip; and
Figure 6 shows the clip, again in section, in place on the strap.

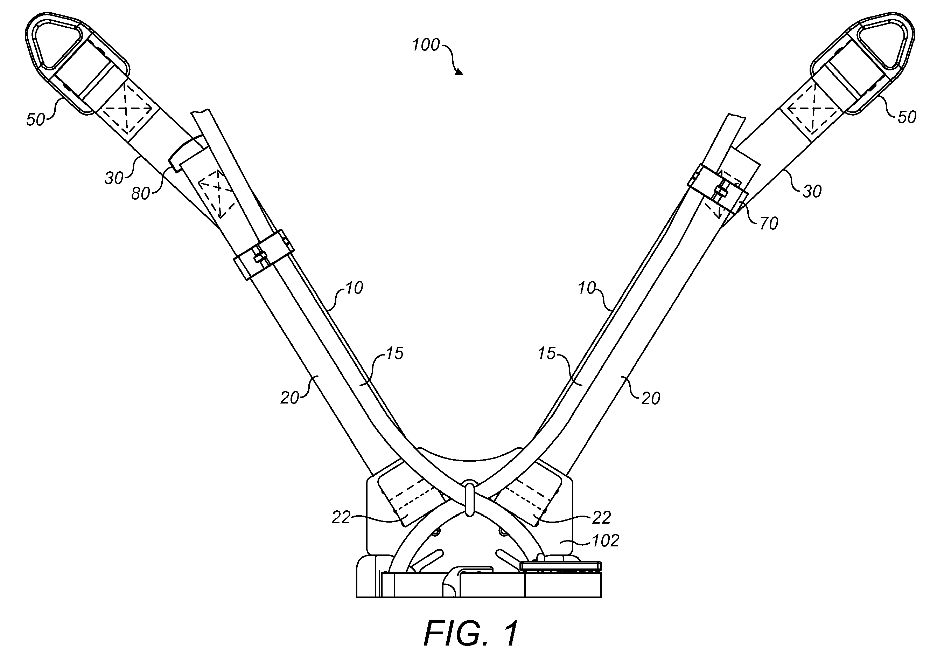

**Figure 1** shows two shoulder straps 10 attached to a back plate (or frame) 102 of a harness 100 for breathing apparatus. The two shoulder straps 10 are identical except that they are mirror-images of one another. The straps have first and second portions 20, 30, with the second strap portions 30 inclined to the first strap portions 20 in opposite directions. The back plate 102 carries a cylinder of compressed gas, not shown, from which hoses 15 lead to a face mask, again not shown. At the other end of the straps are buckles 50 for attaching to length-adjusting strap portions.

It is desirable to hold the hose 10 firmly against the body of the wearer to reduce the likelihood of its catching on any protruding objects as the wearer moves. To this end each hose 15 is clipped to the strap 10 at a suitable point along its length. For instance, on the left-hand side in Figure 1 a clip 70 is shown located about half-way along the strap, where it is free to slide up and down. However, it is advantageous to secure the clip at a suitable point along the strap. In the present embodiment the first and second strap portions 20, 30 are formed by folding and stitching a continuous piece of material, so that even if the stitching fails the first and second strap portions do not become detached. This fold can be used to locate the clip, is shown on the right-hand strap and as will be explained blow.

One feature of the invention can be seen in Figure 1, which is that the clip is asymmetric and holds the hose so that it runs more or less along the left-hand or right-hand half of the strap. It can also be seen that the clip holds the hose underneath it, against the strap, and so, provided the clip does not detach from the strap, the hose is held perfectly securely.

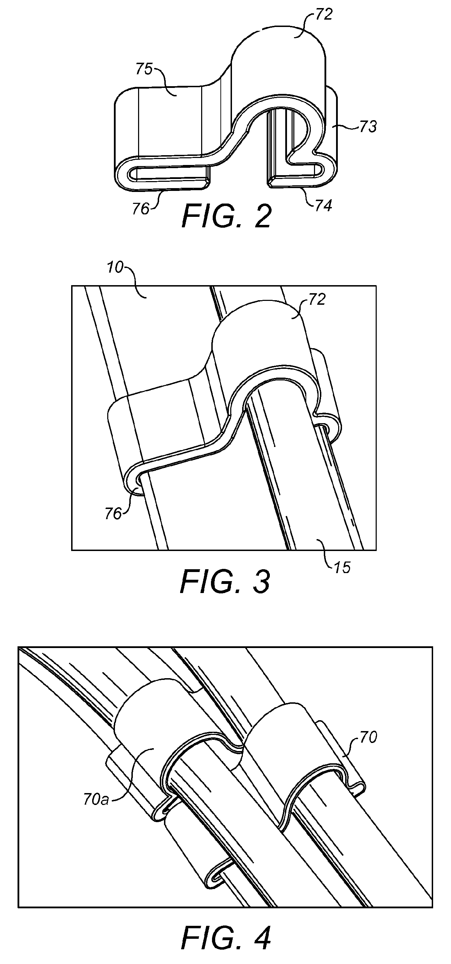

The shape of the clip can be seen from **Figure 2****.** The clip 70 is made of a formed strip of plastics material, or a section of an extruded length, and has roughly cylindrical hose-retaining portions 72 with side portions 73, 75 at each side of the cylinder axis (i.e. the strap length direction). The cylindrical parts 72 are slightly over half a cylinder in circumferential extent. The outer edges of each the side portions are bent underneath with a spacing to form inwardly directed flanges 74, 76 that in use engage underneath the strap. The hose-retaining portion 72 is open towards the strap so that it retains the hose securely. One of the side portions 75 is much wider than the other 73, so that the hose-retaining portion is located essentially entirely in one half of the clip.

**Figure 3** shows the hose and clip in place on a strap 10. It can be seen how the flanges 74, 76 hold the clip on to the strap in the usual way, but here the hose-retaining portion 72 passes over and fits round the hose to hold it securely in place, facing the strap.

It can also be seen how the hose-retaining portion 72 is on one side of the clip, i.e. on one side of the centre line of the strap when fitted. This enables a configuration such as is shown in **Figure 4****.** Here two identical clips 70, 70a are shown, fitted to the same strap, each holding a hose. The clips are fitted opposite ways round, so that the upper clip in the picture holds the hose on the left-hand side of the strap, while the other clip 70 holds its hose on the right. In this way two hoses can be fitted to the same strap (in contrast to Figure 1) without getting in each other's way.

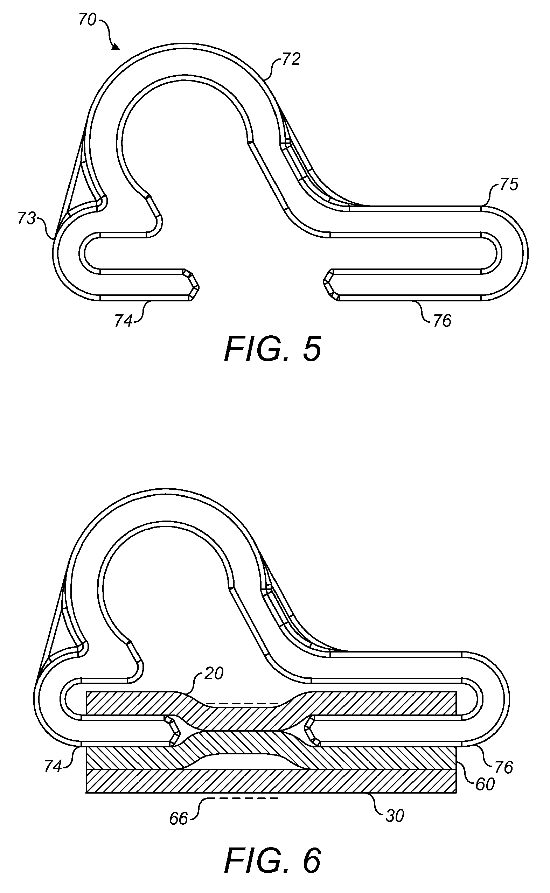

For completeness **Figures 5 and 6** show sections through the clip and, in the case of Figure 6, the strap, though not the hose. It can be seen that the clip can be thought of as a moulded or formed piece of strip material extending from one flange, say the short flange 74, to the other 76, taking in the hose-retaining part 72 which is slightly over-semicylindrical. The flange lengths (in the width direction of the strap) roughly match the lateral extent of the corresponding side portions, so that the gap between the flanges allows the hose to pass straight into the retaining portion 72, which eases assembly.

It is advantageous if the clip is prevented from sliding along the strap once in place. To this end the strap could have an additional fitting, but if the strap is of the type shown in Figure 1, which is folded over and sewn together, then the seams can be arranged to give pockets into which the flanges 74, 76, or at least one of them, can engage.

Figure 6 shows a section through the right-hand strap of Figure 1, taking in the clip and the folded part. The folds 62, 64 between the first strap portion 20, the intermediate strap portion 60 and the second strap portion 30, and the stitching 66 that secures the folds, provide convenient pockets (or openings) in which the hose clip 70 can be located. The retention clip 70 comprising the hose-retaining portion 72 and first and second inwardly protruding flanges 74, 76 can be attached to the strap by locating the flanges 74, 76 in the openings 61 either side of the strap. The stitching 66 in the region of the folds 62, 64 prevents the hose clip 70 from sliding up and down the strap. The fold 64 between the second and intermediate strap portions 30, 40 also provides openings 63 either side of the strap.

In use the hose will be passed through the gap between the flanges and fitted within the hose-retaining portion, which preferably is a tight fit, preferably a slight spring fit. The clip is then fitted on the strap, preferably within the pickets as described. A certain amount of deformation of the strap is necessary for this. The hose is then held securely, though it can still be adjusted for length by sliding it through the clip.

The invention can be used for a kind of breathing apparatus, though it is particularly suitable for firefighting equipment. The clip can be designed to suit corresponding hoses, such as breathing hoses or gauge hoses.

## Claims

1. A clip (70) for attaching to a strap (10) in order to hold a flexible conduit (15), the clip (70) having a retaining part (72), for retaining the flexible conduit (15), which is open such that a flexible conduit (15) can be passed into it, and side parts (73, 75), one each side of the retaining part (72), for engaging the strap (10), **characterised in that** when the clip (70) is fitted to the strap (10), the retaining part (72) is open towards the strap (10) and is arranged to hold the flexible conduit (15) against the strap (10) such that the flexible conduit is completely enclosed.

2. A clip (70) according to claim 1, wherein in use the retaining part (72) is offset, with respect to the width of the strap (10), so as to provide more space over the side part of the clip (70) on one side than on the other.

3. A clip (70) according to claim 1 or 2, wherein the retaining part (72) is generally rounded in shape.

4. A clip (70) according to any preceding claim, wherein the side parts (73, 75) engage with the strap (10) by way of flanges (74, 76) engaging underneath the strap (10) around the edges of the strap (10).

5. A clip (70) according to claim 4, wherein the flanges (74, 76) are of different lengths.

6. A clip (70) according to claim 5, wherein the flange lengths are essentially equal to the lateral extent of the side parts (73, 75).

7. A clip (70) according to any preceding claim, wherein the clip (70) is generally symmetrical about a plane perpendicular to the length of the strap (10).

8. A strap (10) having a pair of clips (70, 70a) according to any preceding claim applied to it opposite ways round, but on the same face of the strap (10), so that one of the clips (70) can retain a flexible conduit (15) running along one side of the strap and the other (70a) a flexible conduit (15) along the other side in such a way that the two flexible conduits (15) do not interfere with each other.

9. A harness (100) for breathing apparatus, having a strap (10), in particular a shoulder strap, on which is located a clip (70) in accordance with any of claims 1 to 7, the clip (70) engaging round the rear side of the strap (10) and completely enclosing, or being capable of enclosing, a flexible conduit (15) so as to retain the flexible conduit (15) against the strap (10).

10. A harness (100) for breathing equipment, having a strap (10), in particular a shoulder strap, on which is located a clip (70) in accordance with any of claims 1 to 7, the clip (70) being adapted to retain the flexible conduit (15) on the strap (10) in a manner offset from the centre line of the strap (10).

11. A harness (100) according to claim 10 in which the strap (10) is according to claim 8.

12. A harness (100) according to claim 10 or 11, wherein the flexible conduits (15) have a diameter less than half the width of the straps (10).

## Patentansprüche

1. Clip (70) zum Anbringen an einem Gurt (10), um eine flexible Leitung (15) zu halten, wobei der Clip (70) ein Halteteil (72) zum Halten der flexiblen Leitung (15) aufweist, das derartig offen ist, dass eine flexible Leitung (15) darin eingepasst werden kann, und Seitenteile (73, 75) aufweist, eines auf jeder Seite des Halteteils (72), um mit dem Gurt (10) in Eingriff zu treten,
**dadurch gekennzeichnet, dass**, wenn der Clip (70) auf dem Gurt (10) eingepasst ist, das Halteteil (72) in Richtung des Gurtes (10) offen und eingerichtet ist, die flexible Leitung (15) derart gegen den Gurt (10) zu halten, dass die flexible Leitung vollständig umschlossen ist.

2. Clip (70) nach Anspruch 1, wobei bei Gebrauch das Halteteil (72) in Bezug auf die Breite des Gurtes (10) versetzt ist, um so über dem Seitenteil des Clips (70) auf einer Seite mehr Platz vorzusehen als auf der anderen Seite.

3. Clip (70) nach Anspruch 1 oder 2, wobei das Halteteil (72) im Allgemeinen eine gerundete Form besitzt.

4. Clip (70) nach einem der vorhergehenden Ansprüche, wobei die Seitenteile (73, 75) durch Flansche (74, 76), welche unterhalb des Gurtes (10) rund um die Ränder des Gurtes (10) eingreifen, mit dem Gurt (10) in Eingriff treten.

5. Clip (70) nach Anspruch 4, wobei die Flansche (74, 76) von verschiedener Länge sind.

6. Clip (70) nach Anspruch 5, wobei die Flanschlängen im Wesentlichen gleich der seitlichen Erstreckung der Seitenteile (73, 75) sind.

7. Clip (70) nach einem der vorhergehenden Ansprüche, wobei der Clip (70) im Allgemeinen symmetrisch zu einer Ebene senkrecht zur Länge des Gurtes (10) ist.

8. Gurt (10) mit einem Paar Clips (70, 70a) nach einem der vorhergehenden Ansprüche, die daran in entgegengesetzter Weise angewendet werden, jedoch auf der gleichen Seite des Gurtes (10), sodass einer der Clips (70) eine flexible Leitung (15) halten kann, die entlang einer Seite des Gurtes verläuft, und der andere (70a) eine flexible Leitung (15) entlang der anderen Seite in einer solchen Weise halten kann, dass die beiden flexiblen Leitungen (15) sich nicht gegenseitig beeinträchtigen.

9. Gurtzeug (100) für ein Atemgerät, das einen Gurt (10) aufweist, insbesondere einen Schultergurt, an dem ein Clip (70) nach einem der Ansprüche 1 bis 7 angeordnet ist, wobei der Clip (70) rund um die Rückseite des Gurtes (10) eingreift und dabei vollständig eine flexible Leitung (15) umfasst oder in der Lage ist, diese zu umfassen, sodass die flexible Leitung (15) gegen den Gurt (10) gehalten wird.

10. Gurtzeug (100) für eine Atemausrüstung, die einen Gurt (10) aufweist, insbesondere einen Schultergurt, an dem ein Clip (70) nach einem der Ansprüche 1 bis 7 angebracht ist, wobei der Clip (70) eingerichtet ist, die flexible Leitung (15) an dem Gurt (10) in einer Weise zu halten, die versetzt zu der Mittellinie des Gurtes (10) ist.

11. Gurtzeug (100) nach Anspruch 10, in dem der Gurt (10) gemäß Anspruch 8 ist.

12. Gurtzeug (100) nach Anspruch 10 oder 11, wobei die flexiblen Leitungen (15) einen Durchmesser von weniger als der Hälfte der Breite des Gutes (10) aufweisen.

## Revendications

1. Pince (70) destinée à être fixée sur une sangle (10) afin de maintenir un conduit flexible (15), la pince (70) comprenant une partie de retenue (72), pour retenir le conduit flexible (15), qui est ouverte de sorte qu'un conduit flexible (15) puisse passer dans celle-ci, et des parties latérales (73, 75), une de chaque côté de la partie de retenue (72), pour entrer en prise avec la sangle (10), **caractérisée en ce que**, lorsque la pince (70) est ajustée sur la sangle (10), la partie de retenue (72) est ouverte en direction de la sangle (10) et est agencée pour maintenir le conduit flexible (15) contre la sangle (10) de sorte que le conduit flexible soit complètement entouré.

2. Pince (70) selon la revendication 1, dans laquelle, lors de l'utilisation, la partie de retenue (72) est décalée, par rapport à la largeur de la sangle (10), de manière à fournir plus d'espace sur la partie latérale de la pince (70) d'un côté que de l'autre.

3. Pince (70) selon la revendication 1 ou 2, dans laquelle la partie de retenue (72) présente une forme généralement arrondie.

4. Pince (70) selon une quelconque revendication précédente, dans laquelle les parties latérales (73, 75) entrent en prise avec la sangle (10) au moyen de brides (74, 76) qui entrent en prise sous la sangle (10) autour des bords de la sangle (10).

5. Pince (70) selon la revendication 4, dans laquelle les brides (74, 76) présentent des longueurs différentes.

6. Pince (70) selon la revendication 5, dans laquelle les longueurs de bride sont sensiblement égales à l'étendue latérale des parties latérales (73, 75).

7. Pince (70) selon une quelconque revendication précédente, dans laquelle la pince (70) est généralement symétrique par rapport à un plan perpendiculaire à la longueur de la sangle (10).

8. Sangle (10) comprenant une paire de pinces (70, 70a) selon une quelconque revendication précédente qui lui est appliquée dans le sens contraire, mais sur la même face de la sangle (10), de sorte que l'une des pinces (70) puisse retenir un conduit flexible (15) s'étendant le long d'un côté de la sangle et l'autre pince (70a) un conduit flexible (15) le long de l'autre côté de sorte que les deux conduits flexibles (15) n'interfèrent pas l'un avec l'autre.

9. Harnais (100) pour appareil respiratoire, comprenant une sangle (10), en particulier une bandoulière, sur laquelle est située une pince (70) conformément à l'une quelconque des revendications 1 à 7, la pince (70) entrant en prise circulaire avec le côté arrière de la sangle (10) et entourant, ou étant capable d'entourer, complètement un conduit flexible (15) de manière à retenir le conduit flexible (15) contre la sangle (10).

10. Harnais (100) pour équipement respiratoire, comprenant une sangle (10), en particulier une bandoulière, sur laquelle est située une pince (70) conformément à l'une quelconque des revendications 1 à 7, la pince (70) étant adaptée à retenir le conduit flexible (15) sur la sangle (10) d'une manière décalée par rapport à la ligne médiane de la sangle (10).

11. Harnais (100) selon la revendication 10 dans lequel la sangle (10) est conforme à la revendication 8.

12. Harnais (100) selon la revendication 10 ou 11, dans lequel les conduits flexibles (15) présentent un diamètre inférieur à la moitié de la largeur des sangles (10).
